# EUROPÄISCHE PATENTSCHRIFT

(11) **EP 1 975 967 B1**
(45) Veröffentlichungstag und Bekanntmachung des Hinweises auf die Patenterteilung: **29.09.2010**
(21) Anmeldenummer: 07005721.1
(22) Anmeldetag: 20.03.2007
(51) Int. Cl.: H01H 71/04, H02H 1/06, H01H 9/16

(54) **Schaltgerät mit einer Einrichtung zur drahtlosen Übertragung einer Gerätezustandsinformation**
Switching device with a device for wireless transmission of information on the status of a device
Commutateur doté d'un dispositif destiné à la transmission sans fil d'informations sur l'état de l'appareil

(43) Veröffentlichungstag der Anmeldung: 01.10.2008
(73) Patentinhaber: SIEMENS AKTIENGESELLSCHAFT, 80333 München (DE)
(72) Erfinder: Keil, Rainer, 90451 Nürnberg (DE)

(56) Entgegenhaltungen:
- WO-A-2005/101604
- DE-A1- 10 248 640
- DE-C1- 10 031 963
- US-A- 5 875 087
- US-A1- 2006 176 630

## Beschreibung

Die Erfindung betrifft ein Schaltgerät, insbesondere ein elektromechanisches Niederspannungsschaltgerät, zur Verwendung in einem Hauptstromkreis, mit einer Einrichtung zur Erkennung wenigstens eines Gerätezustandes, mit einer Einrichtung zur drahtlosen Übertragung wenigstens einer Gerätezustandsinformation und mit einer Einrichtung zur Energieversorgung der Übertragungseinrichtung.

Schaltgeräte, insbesondere Niederspannungsschaltgeräte, mit einer Einrichtung zur Datenübertragung an eine externe Steuereinheit oder ein anderes Gerät benötigen zum Betrieb der Übertragungseinrichtung eine Energieversorgung. Da oft nur ein einziges Signal von dem Schaltgerät zu der Steuereinheit (und ggf. zurück) übertragen werden muss, sind die zu übertragenden Datenmengen häufig sehr gering (< 1 Byte). Die heute praktizierte drahtgebundene Lösung sieht daher für eine Informationsübertragung eine Parallelverdrahtung vor (zwei Signale, zwei Drähte).

Soll die Datenübertragung nun drahtlos erfolgen, so führt die Notwendigkeit einer Energieversorgung der Übertragungseinrichtung dazu, dass eine durch die Verwendung drahtloser Datenübertragungstechnologie erzielte Einsparung beim Verdrahtungsaufwand durch die dann erforderliche Verdrahtung der Energieversorgung zunichte gemacht wird. Bisher ist auch aus diesem Grund bei einfachen Geräten meist der Einsatz einer drahtlosen Datenübertragungstechnologie nicht wirtschaftlich.

Ein bekannter Ansatz zur Lösung dieses Problems ist es, auch die Energieversorgung der Übertragungseinrichtung drahtlos zu bewerkstelligen. Dies ist jedoch sehr aufwendig und nur in sehr wenigen Anwendungsfällen wirtschaftlich. Ein weiterer Lösungsansatz besteht in dem Einsatz einer Batterie zur Energieversorgung der Übertragungseinrichtung. Eine solche Batterie besitzt jedoch nur eine beschränkte Kapazität und damit eine beschränkte Lebensdauer. Aufgrund der dadurch notwendigen regelmäßigen Wartung der Übertragungseinrichtung und des erforderlichen Batterietausches ist auch diese Lösung sehr aufwendig.

Aus der Patentanmeldung US 2006/0176630 A1 gemäß dem Oberbegriff des Anspruchs 1, sowie der Patentschrift DE 100 31 963 C1 sind Schaltgeräte mit Übertragungseinrichtungen bekannt, deren Energieversorgung über den Hauptstromkreis erfolgt. Von Nachteil bei den dort beschriebenen Lösungen ist es, dass der Energieversorgungszustand der Übertragungseinrichtungen durch Außenstehende entweder überhaupt nicht oder nur sehr aufwändig ermittelbar ist.

Eine Aufgabe der Erfindung ist es, eine Technologie bereitzustellen, die auf einfache, robuste und preiswerte Art und Weise die Energieversorgung der Übertragungseinrichtung in einem solchen Schaltgerät sicherstellt und zugleich eine einfache Ermittlung des Energieversorgungszustandes der Übertragungseinrichtung ermöglicht. Diese Aufgabe wird durch ein Schaltgerät nach Anspruch 1 bzw. ein Verfahren nach Anspruch 3 gelöst.

Eine Kernidee der Erfindung ist es, die Energie im Hauptstromkreis für die Versorgung der drahtlosen Kommunikation zu verwenden. Ein zur Verwendung in einem Hauptstromkreis vorgesehenes Schaltgerät ist mit einer Einrichtung zur drahtlosen Übertragung wenigstens einer Gerätezustandsinformation und/oder wenigstens einer Gerätesteuerungsinformation und mit einer Einrichtung zur Energieversorgung der Übertragungseinrichtung ausgestattet, wobei die Energieversorgungseinrichtung zur Entnahme von Energie aus dem Hauptstromkreis ausgebildet ist. Zur Energieversorgung der Übertragungseinrichtung zur drahtlosen Übertragung einer Gerätezustandsinformation des Schaltgerätes und/oder einer Gerätesteuerungsinformation für das Schaltgerät wird also Energie aus dem Hauptstromkreis entnommen. Dabei wird die Tatsache ausgenutzt, dass das Schaltgerät ohnehin in Verbindung zu dem Hauptstromkreis steht.

Ein wesentlicher Vorteil der erfindungsgemäßen Lösung ist es, dass für die Energieversorgung der Übertragungseinrichtung zur drahtlosen Datenübertragung keinerlei Verdrahtungen erforderlich sind. Die Energieversorgung erfolgt durch eine annähernd wartungsfreie, einfache und preiswerte Lösung. Batterien, die eine zyklische Wartung erfordern würden, sind ebenso wenig erforderlich wie eine aufwändige drahtlose Energieübertragung.

Da nicht davon ausgegangen werden kann, dass im Hauptstromkreis stets Energie anliegt, ist es vorgesehen, zwischen der Übertragungseinrichtung einerseits und der Energieversorgungseinrichtung andererseits einen lokalen Zwischenspeicher vorzusehen, der Energie für den Betrieb der Übertragungseinrichtung (und ggf. weitere Funktionseinheiten des Schaltgerätes) zwischenspeichert. Dabei kann es sich bspw. um einen Akkumulator, einen Kondensator oder dergleichen handeln. Die Speichereinrichtung ist vorzugsweise derart dimensioniert, dass die energielosen Zeiten im Hauptstromkreis sicher überbrückt werden können.

Wesentlich für die Erfindung ist es, dass die Übertragungseinrichtung derart ausgebildet ist, dass automatisch immer dann, wenn die energielose Zeit länger andauert und sich der Energieversorgungszustand derart ändert, dass eine sichere Datenkommunikation nicht mehr gewährleistet ist, die Übertragungseinrichtung an die Gegenstation ein Energieversorgungssignal (bspw. Signal "Energieverlust") sendet, welches dann auf der Empfängerseite weiterverarbeitet werden kann. Sobald wieder Energie im Hauptstromkreis anliegt, und die Übertragungseinrichtung mit Energie versorgt wird, folgt eine weitere Übertragung eines Energieversorgungssignals (beispielsweise Signal "Energie wieder vorhanden") an die Gegenstation. Somit ist eine einfache Ermittlung des Energieversorgungszustandes der Übertragungseinrichtung möglich, ohne dass hierfür beispielsweise eine Energiezufuhr von außen erforderlich ist.

Bei den Schaltgeräten der vorliegenden Erfindung handelt es sich vorzugsweise um Geräte zum Schalten (z.B. Schütze) oder zum Schützen (z.B. Motorschutzschalter). Anstelle eines Schützes oder eines Motorschutzschalters kann das Schaltgerät aber auch ein Überlastrelais oder ein anderes Relais sein.

Vorteilhafte Ausgestaltungen der Erfindung sind in den Unteransprüchen angegeben.

Die Art und Weise der Entnahme der Energie aus dem Hauptstromkreis ist für den Hauptgedanken der Erfindung eher von untergeordneter Bedeutung. Die Entnahme kann bspw. durch eine galvanische, induktive oder kapazitive Ankopplung an den Hauptstromkreis erfolgen.

Die Erfindung wird nachfolgend anhand eines Ausführungsbeispiels mit Hilfe einer Zeichnung beschrieben, die eine vereinfachte schematische Darstellung eines erfindungsgemäßen Schaltgerätes zeigt.

Bei dem dargestellten elektromechanischen Niederspannungsschaltgerät handelt es sich um einen Motorschutzschalter 1 zum Anschluss in einen Hauptstromkreis 2. Bei dem Hauptstromkreis 2 handelt es sich um einen typischen Niederspannungsschaltkreis (400V). Der Motorschutzschalter 1 weist eine Anzahl Schaltelemente 3 für die Hauptstrombahnen 4 des Hauptstromkreises 2 auf. Es umfasst darüber hinaus eine Einrichtung zur Erkennung des Schaltzustandes der Schaltelemente 3, zum Beispiel einen mit den Schaltelementen 3 verbundenen Hilfsschalter 5, der wiederum mit einer Einrichtung 6 zur Auswertung des Schaltzustandes verbunden ist. Zur Schaltstellungsauswertung kann anstelle eines Schaltelements 3 auch eine Lichtschranke oder dergleichen zum Einsatz kommen.

Im Betrieb übergibt die Auswerteeinrichtung 6 ein Zustandssignal an eine Einrichtung 7 zur drahtlosen Signalübertragung. Bei den mit dem Zustandssignal übertragenen Gerätezustandsinformationen handelt es sich bspw. um Schaltzustände des Hilfsschalters 5. Bei anderen Schaltgeräten, wie beispielsweise Überlastrelais, umfassen die Gerätezustandsinformationen bspw. den Zustand des Schutzorgans (ein- oder ausgeschaltet), die Anzahl der Auslösungen, die Höhe des Auslösestromes usw. Es liegt im Rahmen der Erfindung, mit Hilfe geeigneter Einrichtungen parallel mehrere Gerätezustände zu erkennen und entsprechend auch mehrere Gerätezustandsinformationen parallel zu übertragen.

Die Signalübertragungseinrichtung 7 ist nicht nur zur Übertragung von Gerätezustandsinformationen von dem Motorschutzschalter 1 an ein Steuergerät oder dergleichen ausgebildet. Mit Hilfe der Signalübertragungseinrichtung 7 ist es ebenfalls möglich, Gerätesteuerungsinformationen an den Motorschutzschalter zu übertragen, wie beispielsweise Signale zur Ansteuerung des Motorschutzschalters sowie Parameter zur Einstellung des Motorschutzschalters usw.

Die Übertragungseinrichtung 7 ist mit einer Antenne 8 zur Abstrahlung eines Funksignals verbunden. Die Übertragungseinrichtung 7 kann jedoch auch eine andere Datenübertragungstechnologie nutzen. Beispielsweise kann die Übertragungseinrichtung 7 zur Aussendung eines optischen Signals ausgebildet sein.

Die Übertragungseinrichtung 7 und die Auswerteeinrichtung 6 sind zum Zweck der Energieversorgung mit einer Einrichtung zur Speicherung von Energie verbunden. Hierzu dient bspw. ein Kondensator 9.

Der Kondensator 9 wird stets dann, wenn Spannung an den Hauptstrombahnen anliegt, durch eine Energieversorgungseinrichtung 10 aufgeladen, die zur Energieauskopplung aus dem Hauptstromkreis 2 ausgebildet ist. Die Energieversorgungseinrichtung 10 ist in, an oder in unmittelbarer Nähe zu der Hauptstrombahn 4 angeordnet. Sie ist vorzugsweise derart ausgebildet, dass bereits die erforderliche galvanische Trennung von Hauptstromkreis 2 und schützinternem Versorgungsstromkreis vorliegt.

Die Übertragungseinrichtung 7 ist derart ausgebildet, dass sie an eine Gegenstation, üblicherweise den Empfänger auch aller übriger Übertragungsdaten, ein bestimmtes Energieversorgungssignal aussendet, wenn sich der Energieversorgungszustand der Übertragungseinrichtung 7 (und der Auswerteeinrichtung 6) derart ändert, dass eine sichere Datenkommunikation nicht mehr gewährleistet ist. Das kann beispielsweise der Fall sein, wenn keine Spannung an den Hauptstrombahnen anliegt und der Kondensator 9 nicht mehr aufgeladen wird. Die Übertragungseinrichtung 7 sendet dann an die Gegenstation das Signal "Energieverlust". Sobald die Übertragungseinrichtung 7 wieder mit Energie versorgt wird, sendet diese dann an die Gegenstation das Signal "Energie wieder vorhanden". Der Schwellwert des Energieversorgungszustandes der Übertragungsreinrichtung 7, bei dem diese ein entsprechendes "Energieverlust"-Signal aussendet, ist vorzugsweise derart festgelegt, dass die Gegenstation daraus die noch verbleibende Betriebsdauer der Übertragungseinrichtung 7 für den Fall ermitteln kann, dass keine weitere Aufladung des Kondensators 9 erfolgt. So kann es bspw. vorgesehen sein, dass ein solches Signal immer dann übertragen wird, wenn die noch vorhandene Energie für eine bestimmte weitere Betriebsdauer der Übertragungseinrichtung 7 ausreichend ist.

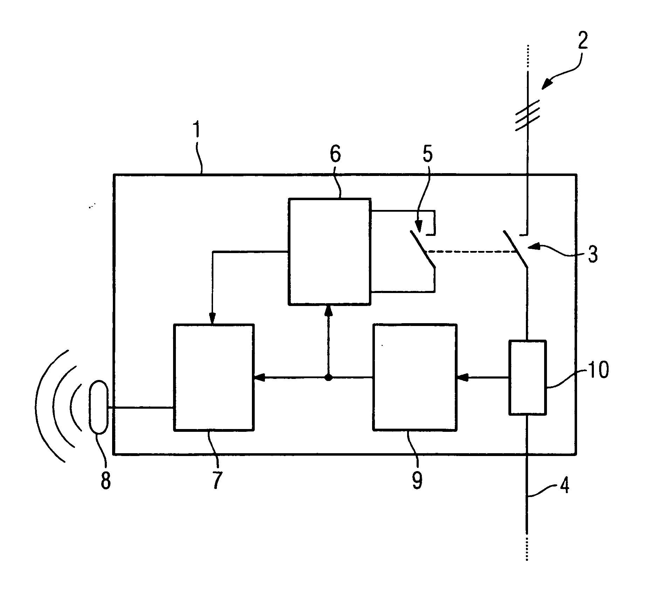

## Patentansprüche

1. Schaltgerät (1), insbesondere elektromechanisches Niederspannungsschaltgerät, zur Verwendung in einem Hauptstromkreis (2),
- mit einer Einrichtung (7) zur drahtlosen Übertragung wenigstens einer Gerätezustandsinformation und/oder wenigstens einer Gerätesteuerungsinformation,
- mit einer Einrichtung (10) zur Energieversorgung der Übertragungseinrichtung (7), wobei die Energieversorgungseinrichtung (10) zur Entnahme von Energie aus dem Hauptstromkreis (2) ausgebildet ist, und
- mit einer mit der Energieversorgungseinrichtung (10) einerseits und der Übertragungseinrichtung (7) andererseits verbundenen Einrichtung (9) zur Speicherung von Energie,
**dadurch gekennzeichnet, dass**
die Übertragungseinrichtung (7) ausgebildet ist zur automatischen Übertragung einer Anzahl unterschiedlicher Energieversorgungssignale in Abhängigkeit von ihrem Energieversorgungszustand.

2. Schaltgerät (1) nach Anspruch 1, **dadurch gekennzeichnet, dass** die Energieversorgungseinrichtung (10) eine galvanische, induktive oder kapazitive Ankopplung an den Hauptstromkreis (2) herstellt.

3. Verfahren zur Energieversorgung einer Einrichtung (7) zur drahtlosen Übertragung wenigstens einer Gerätezustandsinformation und/oder wenigstens einer Gerätesteuerungsinformation in einem Schaltgerät (1) zur Verwendung in einem Hauptstromkreis (2), insbesondere in einem elektromechanischen Niederspannungsschaltgerät, wobei diese Energie aus dem Hauptstromkreis (2) entnommen wird, **dadurch gekennzeichnet, dass** eine Anzahl unterschiedlicher Energieversorgungssignale automatisch in Abhängigkeit von dem Energieversorgungszustand der Übertragungseinrichtung (7) übertragen werden.

## Claims

1. Switching device (1), in particular an electromechanical low-voltage switching device, for use in a main circuit (2),
- having a device (7) for wirelessly transmitting at least one item of device status information and/or at least one item of device control information,
- having a device (10) for supplying energy to the transmission device (7), wherein the energy supply device (10) is embodied for extracting energy from the main circuit (2), and
- having a device (9) for storing energy that is connected to the energy supply device (10) on one side and the transmission device (7) on the other side,
**characterised in that**
the transmission device (7) is embodied for automatically transmitting a number of different energy supply signals as a function of its energy supply status.

2. Switching device (1) according to claim 1, **characterised in that** the energy supply device (10) establishes a galvanic, inductive or capacitive connection to the main circuit (2).

3. Method for supplying energy to a device (7) for wirelessly transmitting at least one item of device status information and/or at least one item of device control information in a switching device (1) for use in a main circuit (2), in particular in an electromechanical low-voltage switching device, wherein said energy is extracted from the main circuit (2), **characterised in that** a number of different energy supply signals are transmitted automatically as a function of the energy supply status of the transmission device (7).

## Revendications

1. Dispositif de commutation (1), notamment dispositif de commutation électromécanique à basse tension, destiné à être utilisé dans un circuit principal (2),
- comprenant un dispositif (7) pour la transmission sans fil d'au moins une information d'état de l'appareil et/ou d'au moins une information de commande de l'appareil,
- comprenant un dispositif (10) pour l'alimentation en énergie du dispositif de transmission (7), le dispositif d'alimentation en énergie (10) étant réalisé pour prélever de l'énergie dans le circuit principal (2), et
- comprenant un dispositif (9) de stockage d'énergie, raccordé d'une part au dispositif d'alimentation en énergie (10) et d'autre part au dispositif de transmission (7),
**caractérisé en ce que**
le dispositif de transmission (7) est réalisé pour la transmission automatique d'un nombre de signaux d'alimentation en énergie différents en fonction de leur état d'alimentation en énergie.

2. Dispositif de commutation (1) selon la revendication 1, **caractérisé en ce que** le dispositif d'alimentation en énergie (10) établit un couplage galvanique, inductif ou capacitif au circuit principal (2).

3. Procédé destiné à l'alimentation en énergie d'un dispositif (7) pour la transmission sans fil d'au moins une information d'état de l'appareil et/ou d'au moins une information de commande de l'appareil dans un dispositif de commutation (1) destiné à être utilisé dans un circuit principal (2), notamment dans un dispositif de commutation électromécanique à basse tension, cette énergie étant prélevée dans le circuit principal (2), **caractérisé en ce qu'**un nombre de signaux d'alimentation en énergie différents sont transmis automatiquement en fonction de l'état d'alimentation en énergie du dispositif de transmission (7).
